Europäisches Patentamt

European Patent Office

Office européen des brevets

(19)

(11) Publication number : **0 475 918 A2**

# (12) EUROPEAN PATENT APPLICATION

(21) Application number : **91830371.0**

(22) Date of filing : **10.09.91**

(51) Int. Cl.⁵ : **F16H 61/06**

(30) Priority : **14.09.90 IT 6769590**

(43) Date of publication of application :
**18.03.92 Bulletin 92/12**

(84) Designated Contracting States :
**BE DE FR GB**

(71) Applicant : **PRODEA S.r.l.**
**Corso IV Novembre 144**
**I-10090 Cascine Vica - Rivoli (Torino) (IT)**

(72) Inventor : **Oberto, Carlo**
**c/o PRODEA S.r.l., Corso IV Novembre 144**
**I-10090 Cascine Vica-Rivoli (Torino) (IT)**

(74) Representative : **Quinterno, Giuseppe et al**
**c/o Jacobacci-Casetta & Perani S.p.A. Via**
**Alfieri, 17**
**I-10121 Torino (IT)**

(54) **An electronic control system for a hydrokinetic power-shift transmission for a motor vehicle.**

(57) The system is intended for controlling a transmission including a hydraulic converter and a power-shift gearbox including a plurality of hydraulic clutches which are associated with the gears, which can be activated selectively by the operation of a selector, and which are controlled by means of a plurality of on-off enabling solenoid valves and a pressure modulator.

The system includes a control unit which pilots the pressure modulator and the solenoid valves in a predetermined manner in dependence on the speeds of rotation of the input and output shafts of the converter, on the speed and sense of rotation of the output shaft of the gearbox, and on the positions of the accelerator, the selector, and an inching control.

EP 0 475 918 A2

Jouve, 18, rue Saint-Denis, 75001 PARIS

FIG. 1

The present invention relates to an electronic control system for a hydrokinetic transmission for a motor vehicle, particularly a lift truck, with an internal combustion engine the speed of rotation of which can be controlled by an accelerator.

More specifically, the invention relates to an electronic control system for a transmission including:

a hydraulic converter, and

a power-shift gearbox coupled to the output shaft of the converter and including a plurality of hydraulic clutches which are associated with the gears, which can be activated selectively by the manual operation of a selector, and which are controlled by a plurality of on-off enabling solenoid valves and an electrically-operated pressure-modulator connected to a source of pressurised fluid.

The invention is intended, in particular, for a control system including:

sensor means for supplying electrical signals indicative of the speeds of rotation of the input and output shafts of the hydraulic converter, of the speed and sense of rotation of the output shaft of the gearbox, and of the positions of the engine accelerator and the selector, and

an electronic processing and control unit which is arranged to pilot the pressure modulator and the enabling solenoid valves in a predetermined manner in dependence on the signals supplied thereto by the sensor means.

At the moment, with lift trucks which have hydrokinetic transmissions, when the forks which support the load have to be lifted, it is necessary to accelerate the internal combustion engine in order to supply the lifting pump. Naturally, this acceleration simultaneously changes the speed of the vehicle and the driver has to counteract this by acting on the pedal operating the clutch which transmits the drive from the engine to the wheels. This operation requires skill and accuracy and presupposes a certain familiarity with the vehicle.

An object of the present invention is to provide an electronic control system for a hydrokinetic transmission for a motor vehicle with an internal combustion engine, particularly a lift truck, which enables the operation described above to be carried out automatically without the need for the user to have any particular skill or familiarity with the vehicle.

According to the invention, these and other objects are achieved by means of an electronic control system for a hydrokinetic transmission of the type specified above, the main characteristic of which lies in the fact that the system also includes a manual or pedal-operated control connected to the electronic unit, and in that the unit is arranged to effect an automatic control procedure for advancing the vehicle slowly at a predetermined speed when the sensor means indicate that the selector is set at a gear ratio and the manual or pedal-operated control is operated, the unit automatically regulating, by means of the modulator, the pressure of the fluid supplied selectively to the clutch or clutches associated with the gear engaged during the slow advance procedure so that the deviations of the speed of the vehicle from a predetermined reference value, which depends on the detected extent of operation of the manual or pedal-operated control and on the gear engaged, are kept within a predetermined range.

Further characteristics and advantages of the system according to the invention will become clear from the detailed description which follows with reference to the appended drawings, provided purely by way of non-limiting example, in which:

Figure 1 is an electrical diagram, partially in block form, showing the structure of a control system for a hydrokinetic transmission according to the invention,

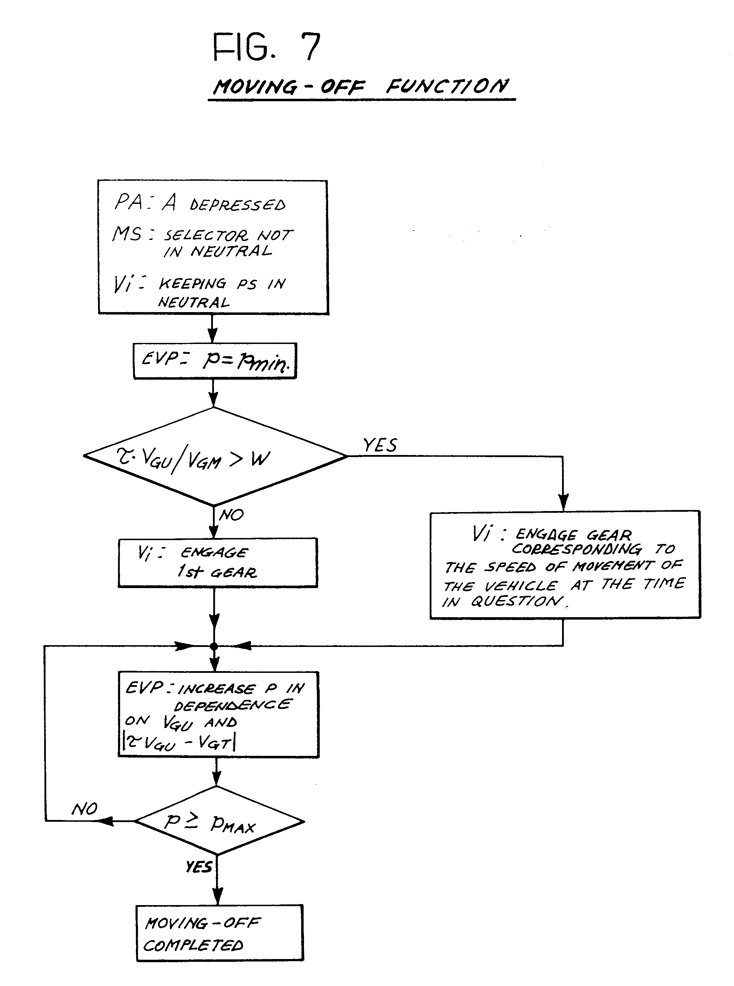

Figures 2 to 7 are simplified flow charts showing some methods or functions carried out during the operation of the system of Figure 1.

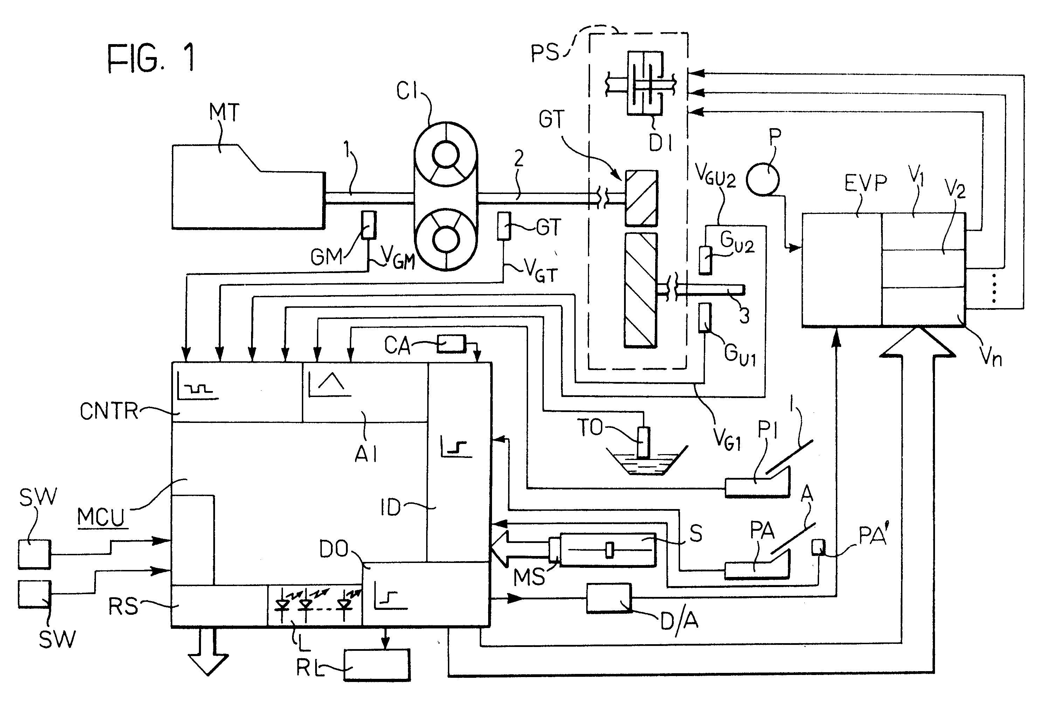

In Figure 1, an internal combustion engine, for example a diesel engine for a motor vehicle, for example, a lift truck, is indicated MT.

A hydraulic torque converter of known type, generally indicated CI, includes a pump connected to the shaft 1 of the motor MT and a turbine with a shaft 2 which represents the output shaft of the converter. The shaft also represents the input of a power-shift gearbox, generally indicated PS. The gearbox is of known type and includes a plurality of hydraulic clutches DI and gear trains GT associated with the various gear ratios which can be achieved. The clutches can be activated selectively by the manual operation of a selector, indicated S.

The hydraulic clutches DI of the gearbox (which may be constituted by friction devices with packs of hydraulically-operated discs of frictional material) are controlled by means of a corresponding number of enabling on/off solenoid valves $V_1$, $V_2$, ....$V_n$ and an associated electrically-operated pressure modulator EVP constituted, for example, by a proportional solenoid valve. The pressure modulator is connected to a source P of pressurised fluid constituted, for example, by a pump driven by the engine MT.

In operation, the selective operation of one or more of the enabling solenoid valves $V_1$ .....$V_n$ causes pressurised fluid to be supplied selectively to one or more clutches DI of the gearbox PS at a pressure defined by the modulator EVP which, in fact, selectively puts one of the gears or ratios of the gearbox into operation.

The output shaft 3 of the gearbox PS is connected to the wheels of the motor vehicle in known manner, for example, by a crown wheel and pinion.

Rotation-speed sensors associated with the output shaft 1 of the engine MT, the output shaft 2 of the hydraulic converter CI, and the output shaft 3 of the gearbox PS are indicated GM, GT, GU1 and GU2, respectively.

These speed sensors may be constituted, for example, by Hall-effect sensors.

The sensors GU1 and GU2 actually detect the angular velocity of the same output shaft of the gearbox PS, but an examination of the signals supplied thereby in combination, and in particular of their phase difference, enables the sense of rotation of the shaft to be determined.

A electrical temperature sensor for detecting the temperature of the operating fluid in the hydraulic system for operating the gearbox is indicated TO.

A first position sensor, indicated PA, is associated with the accelerator (pedal) A of the engine MT. This is an on-off sensor and is therefore not intended to indicate the extent of the operation of the accelerator but serves solely for discriminating between the activated and deactivated conditions thereof.

A second position sensor, indicated PA', is associated with the accelerator (pedal) A of the engine MT. This on-off sensor serves to detect the condition of maximum acceleration.

A electrical position sensor, for example a potentiometric sensor, indicated PI, is associated with a manual or pedal-operated control I which, as will become clearer from the following, substantially emulates the function of the friction clutch pedal of lift trucks with conventional hydrokinetic transmissions (the inching pedal).

A further electrical position sensor, indicated CA, is associated with the switch for starting the engine MT and is intended to supply a signal when the key which operates the switch is moved to the unstable engine-starting position.

An electronic control unit, indicated MCU, formed with the use of a microprocessor, has a series of counting inputs CNTR connected to the speed sensors GM, GT, GU1 and GU2, a plurality of analog inputs AI connected to the temperature sensor TO and the sensor PI, a plurality of digital inputs ID connected to the accelerator sensors PA and PA', and a series MS of switches which are associated with the selector S and each of which is operated when the user selects a corresponding gear of the gearbox PS.

The unit MCU has a series of digital outputs DO which control the enabling solenoid valves V1...Vn.

A further digital output of the unit MCU controls the pressure modulator EVP by means of a digital/analog converter D/A.

A further digital output of the control unit is connected to a relay RL which controls the electrical supply to the starter circuit of the engine MT. The unit MCU can enable or prevent the starting of the engine by means of this relay under the circumstances which will be described further below.

Optical indicators, such as a plurality of light-emitting diodes, generally indicated L in Figure 1, are also associated with the unit MCU.

The unit ECU may conveniently also have a serial interface RS, for example an RS232 interface, for enabling it to converse with an external unit.

The unit MCU is arranged by known techniques to acquire the signals supplied by the sensors connected thereto and to recognise a certain predefined number of operative conditions or phases of the engine MT and of the associated hydrodynamic transmission.

Each of these phases is recognised upon the basis of the detection of the simultaneous occurrence of conditions which are indicated by the sensors and unambiguously define the phase, and according to logic criteria involving exclusion by priority and consequentiality in relation to the preceding phase.

When the unit MCU recognises a phase it brings a particular predefined control procedure into operation.

The main operative phases or functions which the unit MUC can recognise and put into effect are substantially as follows:

– the inching function: the unit MCU controls the transmission so as to move the vehicle slowly and automatically maintains the set speed of advance;

– the stopping function: the unit MCU controls the transmission so as to stop the vehicle automatically, even on a slope, without the need for the continuous operation of the brakes;

– automatic deceleration:

– the retarding function: the unit MCU slows the vehicle automatically in dependence on the degree of acceleration detected;

– the reversal function: the unit MCU controls the deceleration of the vehicle during the reversal of the drive;

– the moving-off function: the unit MCU controls the transmission so as to adjust automatically the manner in which moving-off is effected to the prevailing operative conditions, and to limit the rearward movement of the vehicle when it moves off on a slope;

– the gear-changing function.

Conveniently, one or more switches SW are also connected to the unit MCU for enabling the manual preselection of two basic operating modes of the control system, that is, the modes which will be referred to below

as <u>automatic</u> mode and <u>manual</u> mode, respectively.

In automatic mode, the unit MCU controls the transmission on the basis of the states of the signals it receives from the various control devices <u>and from the sensors</u>, in order to recognise the operative phases and perform the functions described briefly above.

In manual mode, the unit MCU controls the transmission solely on the basis of the signals supplied by the control devices, so that the vehicle and, in particular, the lift truck operates just like a conventional vehicle, that is, even in the event of a malfunction or damage to the control sensors and/or when some of the parameters monitored exceed predetermined limits.

The actual innovative characteristics of the control system according to the invention, however, are those which achieve the automatic operating mode. This mode of operation will therefore be dwelt upon specifically below with particular reference to the functions listed above.

## THE INCHING FUNCTION

This function results in the reaching and maintenance of a speed of movement of the vehicle ($V_T$) which - for each gear - is variable according to a predetermined function of the degree of operation of the manual or pedal-operated control I, that is, regardless of the prevailing running conditions of the vehicle.

This function is put into effect when the sensors PI and MS indicate that the selector is set at a gear ratio and the control I is operated.

Predetermined speeds of movement ($V_T$) of the vehicle corresponding to the gears and to the degrees of activation of the control I, indicated by the sensor PI, are stored in the memories of the control unit MCU in table form.

When the inching function is put into operation, the unit MCU checks (on the basis of the signals supplied by the sensor GU1 or GU2) whether the speed of rotation of the output shaft 3 of the gearbox PS corresponds to the speed of movement $V_T$ of the vehicle, which corresponds to the gear engaged and to the extent of operation of the control I. If so, the unit MCU does not alter the conditions for piloting the pressure modulator EVP and the enabling of the solenoid valves V1...Vn.

If the speed of the output shaft of the gearbox corresponds to a vehicle speed different from that read from its memory, however, the unit MCU pilots the proportional solenoid valve EVP so as to vary the pressure of the fluid supplied to the clutch or clutches engaged at that time, that is, until the speed of rotation of the shaft 3 corresponds to the vehicle speed value in its memory.

If the vehicle speed has to be increased, the unit MCU pilots the pressure modulator EVP so as successively to increase the pressure of the fluid. Conveniently, in order to prevent instability, there should be a suitable delay between successive pressure increases.

When the pressure is increased, the pressure value reached is stored and at the next intervention, a further increase takes place starting from the value stored. In other words, the pressure correction is incremental.

It should be noted that, although the present description refers to the pressure of the fluid, the pressure is not actually detected directly by the unit MCU by means of a suitable pressure sensor but is derived on the basis of the average intensity of the current supplied to the proportional solenoid valve EVP and on the basis of the current/pressure characteristics of the solenoid valve.

The unit ECU is conveniently arranged to calculate the individual pressure increments according to the following formula:

$$\triangle{}^{*}p = p_k - p_{k-1} = A \cdot \left[ \frac{V_T - \alpha \cdot V_{GU}}{V_T} \right]^2 \cdot \frac{V_{GT}}{V_{GM}} \quad (1)$$

in which

$p_k$ is the pressure value to be achieved,

$p_{k-1}$ is the pressure previously achieved,

$\alpha$ is a positive constant,

A is a predetermined function of $V_{GU}/V_T$; in practice, A may assume, for example, a first value when $V_{GU} < 0.8 V_T$ and a second, lower value when $V_{GU}$ $0.8 V_T$,

$V_T$ is the speed of movement of the vehicle, read from the memory,

$V_{GU}$ is the detected speed of rotation of the output shaft 3 of the gearbox,

$V_{GT}$ is the speed of rotation of the input shaft 2 of the gearbox PS, and

$V_{GM}$ is the speed of rotation of the shaft 1 of the engine MT.

When the gearbox output speed $V_{GU}$ corresponds to a vehicle speed greater than the theoretical value $V_T$ read from the memory, the unit MCU pilots the pressure modulator EVP so as to cause successive decreases in the pressure of the fluid.

The pressure decrements are preferably calculated according to the following equation:

$$\Delta^* p \;=\; B \cdot \frac{\alpha \cdot V_{GU} - V_T}{V_T{}^2} \cdot \frac{V_{GT}}{V_{GM}} \quad (2)$$

in which:

B is a positive constant and the other symbols have the meanings defined above.

The pressure increments or decrements calculated by the equations (1) or (2) given above are valid for a certain reference temperature of the fluid in the hydraulic control system of the gearbox, for example, for a $T_{rif}$ = 40°C, which corresponds to a known value of the kinematic viscosity of the fluid. The viscosity, and hence the hydraulic response of the system, varies with changes in the temperature of the fluid (detected by the sensor TO) and the unit MCU conveniently takes account of this by modifying the $\Delta^*p$ calculated by equations (1) or (2) by multiplying it by a factor TF which is calculated as a function of the ratio between the viscosity of the fluid at its temperature T at the time in question and its viscosity at the reference temperature $T_{rif}$.

The viscosity/temperature characteristics of a hydraulic fluid are generally known or, at any rate, can be found.

Tests carried out indicated that good results are achieved if TF is a quadratic function of the ratio between the viscosities at the temperature T and at the temperature $T_{rif}$.

The unit MCU thus calculates the pressure increments or decrements according to the equation:

$$\overline{\Delta}p \;=\; \Delta p^* \cdot TF \quad (3)$$

The incremental variations in pressure defined by equation ( 3 ) given above are conveniently modified again before being put into effect, to take account of another dynamic effect. In fact, when the rate of rotation of the turbine of the hydraulic converter CI and hence the rate of rotation of the input shaft of the clutches DI of the gearbox vary, the centrifugal force of the hydraulic fluid (oil) in the clutches also varies, unless they have devices for compensating for the centrifugal force. The change in the centrifugal force in turn changes the pressure which effectively transmits the torque, and the unit MCU conveniently takes account of this in order to pilot the proportional solenoid valve EVP correctly and precisely.

For this purpose, the law according to which the limit pressure (at the output of EVP) at which torque is not yet transmitted in the clutches DI (when the discs of the friction clutch start to slip) varies in dependence on the speed of rotation was found beforehand for the system under test. The law varies from one device to another but is generally substantially quadratic (parabolic) and can easily be stored in the unit MCU, for example, in table form.

For each moment at which the unit MCU has to calculate an incremental pressure change for the operating fluid, therefore, it first calculates the theoretical pressure change according to equation (1) or equation (2) and then applies equation (3) to take account of the temperature of the fluid. It then subtracts from the calculated value of $\overline{\Delta} p$ a term $p_{cf}$ which takes account of the contribution to the pressure which is due to the variation in the centrifugal force and is derived from the aforementioned table.

The unit MCU is thus arranged finally to effect an incremental pressure variation

$$\Delta p \;=\; \overline{\Delta} p - p_{cf} \quad (4)$$

Having thus determined the actual value $\Delta_p$ of the incremental pressure variation to be effected, the unit MCU determines the current to be sent to the solenoid valve EVP on the basis of its pressure/current characteristic, which is also stored, and then pilots the solenoid valve correspondingly. EVP can be piloted, for example, by a pulse-width modulated signal (PWM).

The foregoing explanation relating to the inching function applies when the vehicle is stationary or moving in the logical direction of advance, that is, the direction which is desires by the user and is consistent with the gear engaged when the function is first put into effect. The control unit MCU is therefore conveniently arranged to check this condition by observing the phase difference between the signals of the speed sensors GU1 and GU2.

If this check indicates that the vehicle is moving in the opposite direction from that which is desired and consistent with the gear engaged (for example, if the user has engaged the first forward gear and the unit MCU detects that the vehicle, on the other hand, is moving backwards - this situation being possible, for example, when the vehicle is on a slope) the unit MCU of the system calculates and puts into effect an incremental pressure variation according to the following functional relationship:

6

$$\triangle p = \overline{\triangle} p - P_{cf} = \triangle p^*. \ TF - P_{cf} =$$
$$= C. \ \frac{V_{GT}}{V_{GM}} \ . \ TF - P_{cf} \tag{5}$$

in which C is a constant and the other symbols have the meanings defined above.

The unit continues to control the pressure of the fluid according to the equation (5) given above until the sensors GU1 and GU2 indicate that the vehicle has stopped or has started to move in the direction consistent with the gear engaged. At this point, the unit MCU adopts the equation (4) given above for calculating the incremental pressure variation (which may still be necessary).

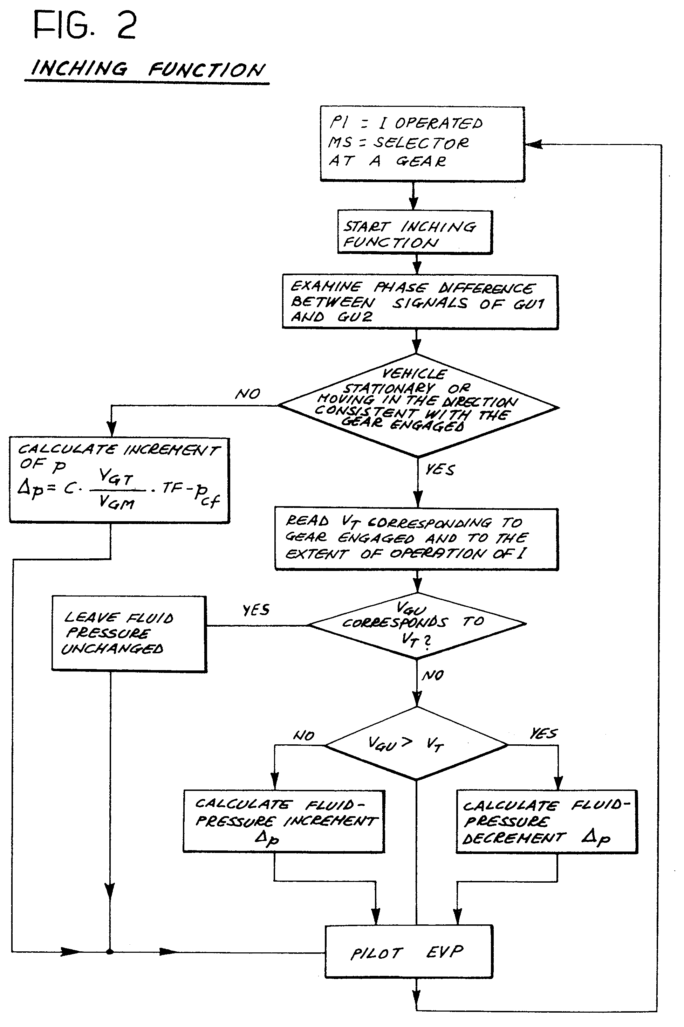

The manner in which the system operates and, in particular, the procedure effected by the unit MCU during the inching phase or function are summarised in the flow chart of Figure 2.

THE STOPPING FUNCTION

As already stated, in this case, the unit MCU controls the transmission so as to stop the vehicle automatically, even on a slope, without the need for the continuous operation of the brakes. This function is brought into operation each time the unit MCU detects an absence of signals for causing the vehicle to move.

More specifically, the unit MCU recognises the need to activate this function when:
– the inching control pedal I is released (information supplied by the sensor PI), and
– if the vehicle includes an accelerator pedal and a selector with forward, reverse and neutral gears, the selector MS is the neutral position; alternatively, for this type of vehicle, the function may be enabled even if the selector is not in neutral but if the accelerator pedal is released and the speed sensor GU1 (or GU2) indicates that the rate of rotation of the gearbox output shaft is less than a minimum predetermined value;
– if the vehicle is of the type with two accelerator pedals, one for each direction of travel and a gear selector without a neutral position, both the accelerator pedals must be released; in this case, naturally, the system will include two position sensors associated with the two accelerators respectively, instead of a single sensor.

Once the conditions given above have been recognised, the unit MCU operates the pressure modulator EVP so as immediately to reduce the pressure of the hydraulic fluid to a predetermined minimum value and then simultaneously oPerates the solenoid valves $V_i$ corresponding to the clutches DI associated with the first forward gear and the first reverse gear.

The unit MCU then checks the condition of the accelerator pedal (or pedals) again:
– if the pedal or pedals are operated, the unit MCU pilots EVP and the solenoid valves $V_i$ so as to maintain the situation in which the fluid is at a minimum pressure and the first forward and first reverse gears are simultaneously engaged, that is, naturally, if the selector MS is in neutral;
– if the pedal or pedals are released, after a delay to allow the fluid in the pipes leading to the on-off valves $V_i$ activated to reach an operating pressure, the unit MCU pilots the pressure modulator EVP so as to increase the pressure of the fluid until $V_{GT}/V_{GM} \leqq 0.1$ (the condition in which the hydraulic converter I tends to stall) or until a predetermined limit pressure is reached. The pressure increase is stopped as soon as one of these two conditions is reached.

The pressure is increased until it reaches one of these conditions by successive variations calculated by the unit MCU according to the following equation:

$$\triangle p = \overline{\triangle} p - P_{cf} = \triangle^* p \ . \ TF - P_{cf} =$$
$$= \left\{ D. \left[ 1 - \frac{V_{GT}}{V_{GM}}^2 \right] + E \right\} \ . \ TF - P_{cf} \tag{6}$$

in which D and E are constants and the other symbols have the meanings defined above.

During the stage at which the fluid pressure is increasing, the individual pressure increment p is suspended, that is, is not put into effect, if the unit MCU detects (on the basis of the signals supplied by the sensor GU1 or GU2) that the rate of rotation of the gearbox output shaft is greater than a predetermined value, for example 5 revolutions/minute. This prevents the vehicle from stopping abruptly when it is still moving at a fairly sustained speed, even if it is below that at which the stopping function is recognised and put into operation.

In general, by operating in the manner described above, the unit MCU can stop the vehicle even on a slope (upward or downward) and even without the continuous operation of the brakes (provided, of course, that the engine of the vehicle which drives the pump P is running).

## The stopping (waiting) function during an inching phase

The unit MCU is conveniently arranged also to put the stopping function into effect when it detects during an inching phase that:
- the inching pedal I is operated beyond a predetermined distance (position), or
- the inching pedal I is operated (even if it is not beyond the predetermined position) <u>and</u> the selector is in the neutral position or the accelerator pedal (or pedals) is (are) released.

When the unit MCU detects that these conditions have occurred during an inching phase, it activates the stopping function in the manner described above.

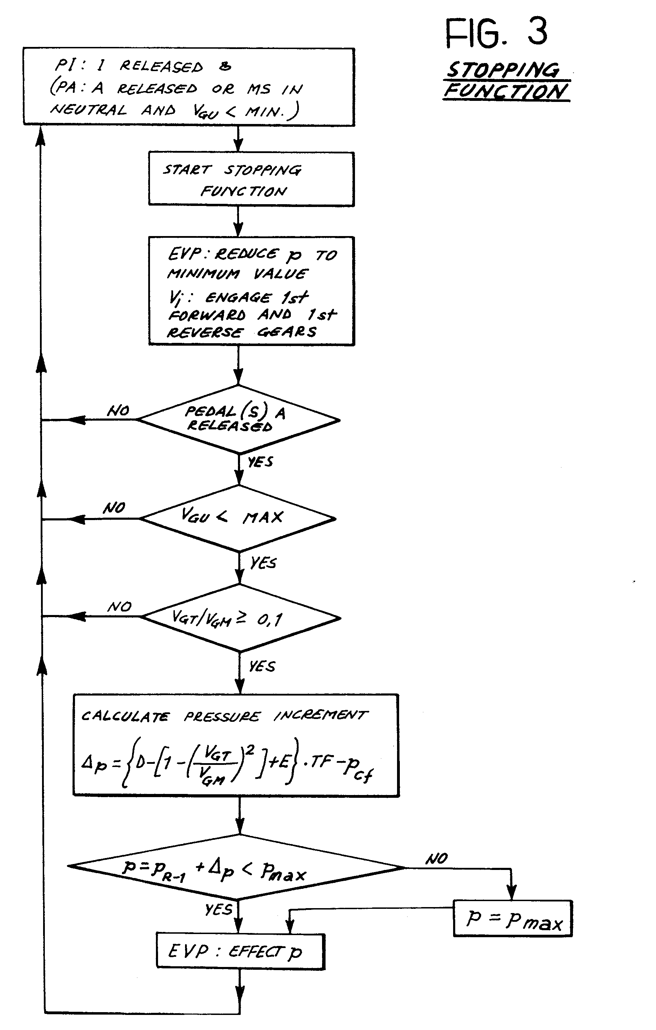

The main steps carried out in the stopping phase are summarised in the simplified flow chart of Fig. 3.

## AUTOMATIC DECELERATION

The following description relates not to a true function of the system but to a procedure which is used when the unit MCU has to put into effect the retarding and reversal functions which will be described in greater detail below.

In the automatic deceleration procedure, the unit MCU derives data concerning the deceleration of the vehicle from the sensor GU1 or GU2.

If the deceleration of the vehicle is less than a predetermined limit, the unit MCU puts into effect a procedure in which the fluid pressure is increased progressively by increments $\Delta p$ which are calculated in different ways for the retarding and reversal functions, respectively. The equations for the pressure increments $\Delta p$ for these functions will be given below.

If the deceleration exceeds the predetermined limit value, however, the unit MCU causes successive decreases $\Delta p$ in the pressure of the fluid and these are also calculated by different equations according to whether the deceleration control takes place during the operation of the reversal function or of the retarding function.

In any case, the unit MCU is arranged to calculate the product:

$$\beta = p \cdot |V_{GT} - V_{GU1} \cdot \tau| \quad (7)$$

in which p represents the (overall) pressure of the hydraulic fluid, tau is the input/output transmission ratio at the time in question, and the other symbols have the meanings defined above.

As can be seen, the quantity beta defined by the equation (7) given above corresponds substantially to the energy dissipated in the clutches DI activated.

The unit MCU compares $\beta$ with a reference value $\beta_o$ which corresponds to the maximum energy which can be dissipated without damaging the clutches.

Each individual pressure increment is thus effected upon the condition that $\beta$ does not exceed $\beta_o$.

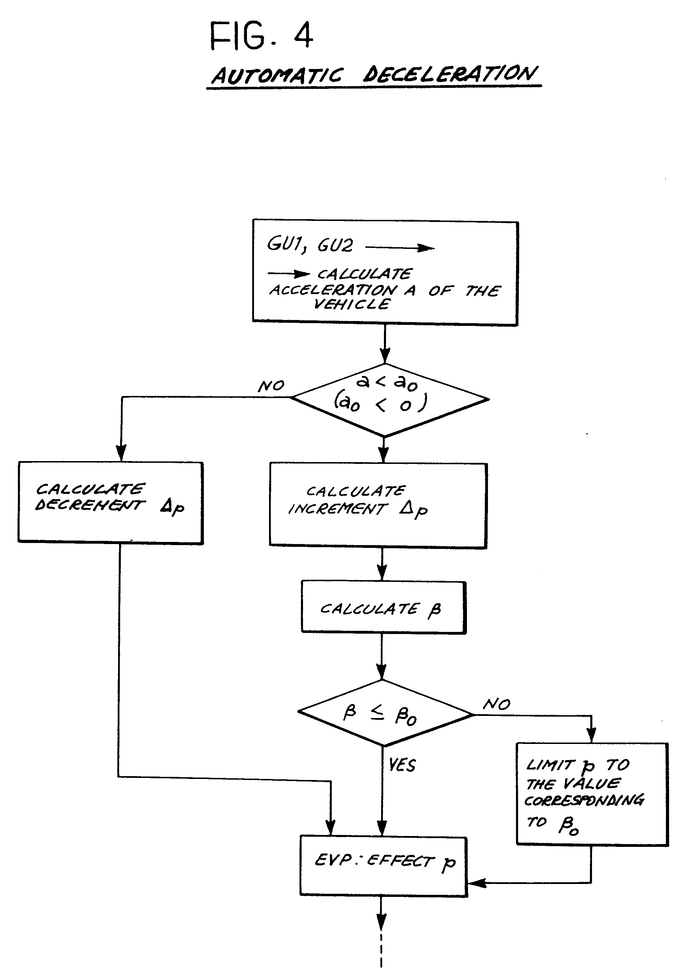

As can be seen from the simplified flow chart of Figure 4, if $\beta > \beta_o$, the unit MCU pilots the pressure modulator EVP so as to limit the fluid pressure p to the value which corresponds to $\beta_o$.

## THE RETARDING FUNCTION

The unit MCU puts this function into effect in order to slow the vehicle automatically in dependence on its detected speed of advance when the following conditions are recognised:
1) the sensors MS and PA indicate that first gear (forward or reverse) is engaged and the accelerator pedal A is depressed, or
2) the sensors indicate that a gear (forward or reverse) is engaged and the pedal A is released.

The retarding function is activated, however, upon the condition that it has been detected beforehand that the speed of rotation of the output shaft 3 of the gearbox PS multiplied by its transmission ratio $\tau$ and divided by the speed of rotation $V_{GM}$ of the engine shaft 1 is greater than a predetermined value Z which is greater than or equal to 1.

If this condition is satisfied, the unit MCU reduces the pressure p of the operating fluid to a predetermined

minimum value $P_{min}$ by means of the pressure modulator EVP, and then engages, by means of one or more valves $V_i$, the first gear contrary to that which the sensor MSS indicates is selected at the time in question.

When this step has been carried out, the unit MCU puts into effect the automatic deceleration procedure described above with reference to Figure 4.

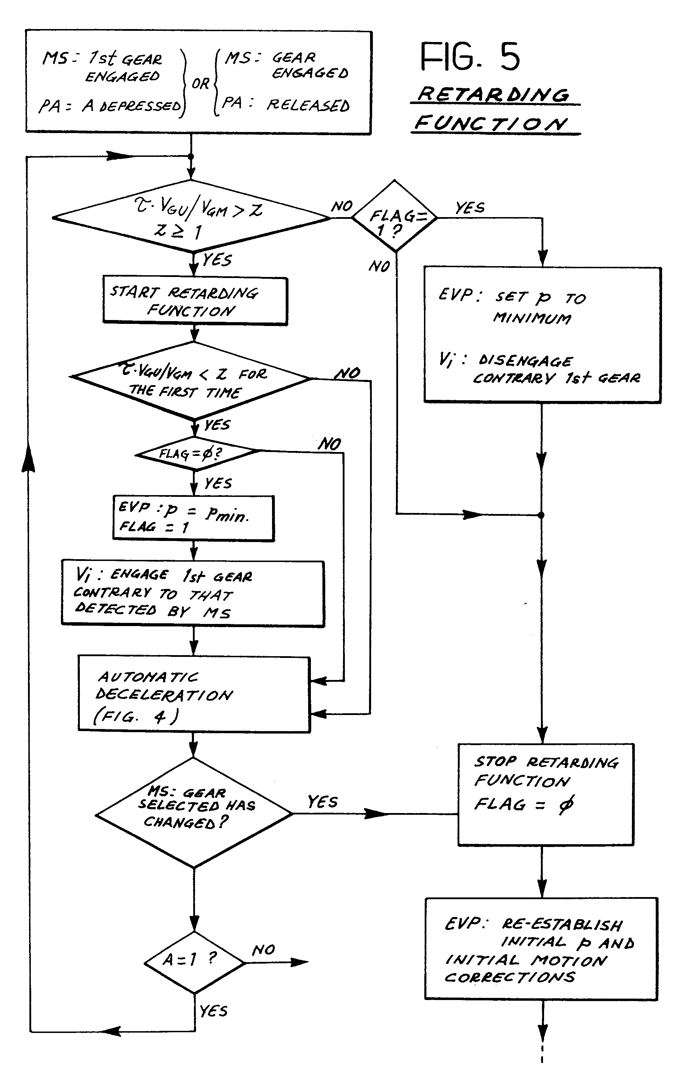

Upon completion of this procedure, the unit MCU checks (on the basis of the signal supplied by the sensor MS) whether the gear selected by the driver has changed in the meantime. If so, the unit MCU stops carrying out the retarding function, if not, the retarding procedure is continued, as indicated in the simplified flow chart of Figure 5. As can be seen from this chart, if at the first check $V_{GU} \cdot \tau / V_{GM}$ is not greater than Z, the unit MCU re-establishes the initial fluid-pressure value by means of EVP and the valves $V_i$ and disengages the opposing first gear previously engaged.

As can be seen from the flow chart, the initial reduction in the fluid pressure and the engagement of the contrary first gear are carried out only after the condition $\tau \cdot V_{GU}/V_{GM} < Z$ has been detected for the first time whilst the retarding function is being carried out.

## THE REVERSAL FUNCTION

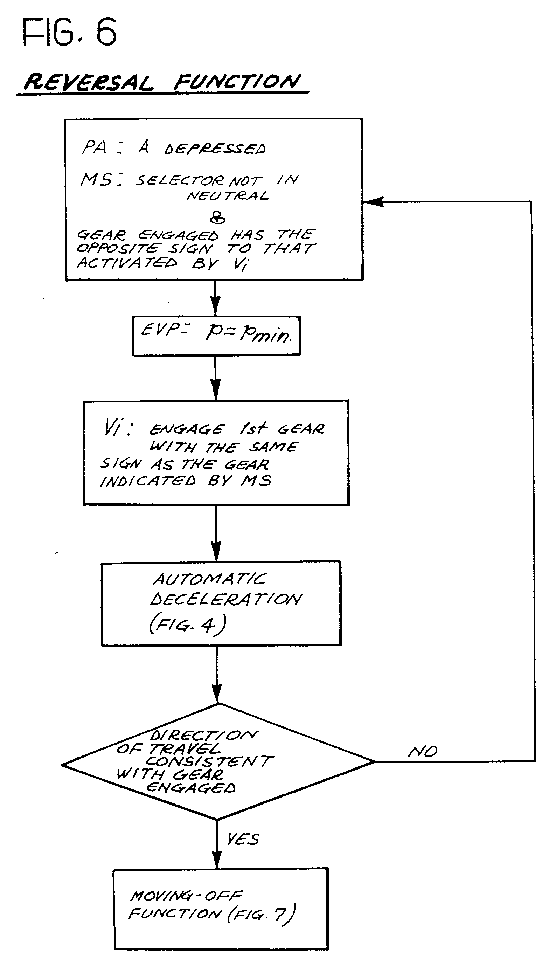

As can be seen from the simplified flow chart of Figure 6, the unit MCU recognises the situation in which this function should be activated when, apart from other considerations pertaining to the order of priority for the activation of the various functions, the signals supplied by the sensors PA and MS indicate that the accelerator A is depressed, the selector is not in the neutral position and the gear engaged by the selector relates to a direction of movement opposite that being achieved at that time by the on-off valves $V_i$.

When it has recognised this situation, the unit MCU pilots the pressure modulator EVP and the solenoid valves $V_i$ so as first to reduce the fluid pressure p to a minimum value $p_{min}$ and then to engage the first gear with the same sign (relating to the same direction) as the gear selected and indicated by the sensor MS.

When it has taken these steps, the unit MCU puts into effect the automatic deceleration procedure described above with reference to Figure 4.

Upon completion of this procedure, the unit MCU checks, on the basis of the signals supplied by the sensors GU1 or GU2 and MS whether the direction of advance of the vehicle corresponds to the gear engaged (for example, if the gear engaged is a forward gear, the vehicle should move forwards). If this check gives a positive result, the unit MCU then puts into effect the moving-off function which will be described below. If the result is negative, the unit MCU continues to carry out the preceding operations cyclically.

## THE MOVING-OFF FUNCTION

This function is put into effect after a stopping phase when the unit MCU detects that, whilst the solenoid valves $V_i$ are keeping the gearbox PS in neutral, the sensors PA and MS indicate that the accelerator pedal A is depressed and the selector is not in the neutral position.

In this event, the unit MCU pilots the pressure modulator EVP so as to bring the pressure p of the fluid to a minimum value $p_{min}$. When this condition has been reached, by the solenoid valves $V_i$ the unit MCU engages the first gear or the gear which corresponds to the speed of the movement at the time in question (in the direction corresponding to the setting of the selector) according to whether the ratio $\tau \cdot V_{GU}/V_{GM}$ is less than or greater than a predetermined value W.

When the gear is engaged, the unit MCU pilots the pressure modulator EVP so as to cause a gradual pressure increase in a different manner according to the gear engaged, in dependence on $V_{GU}$ and $\tau \cdot V_{GU}-V_{GT}$ (this second quantity is indicative of the relative sliding between the packs of discs of the clutches DI).

## MOVING OFF UPHILL

A test which has been used up to now to evaluate the performance of a lift truck consists of so-called moving off uphill or hill starting and measures the distance by which a lift truck with a predetermined load moves backwards when it changes rapidly and sequentially from the condition in which the brakes are operated to the condition in which the accelerator is depressed.

In order to limit the backward movement of the truck in such conditions, the transmission system must allow a high torque to be delivered very quickly. However, if the system is regulated so as to give a high torque quickly on an uphill slope, the same system will cause the truck to move off too abruptly when it is operating on the flat or on a downhill slope.

In order to prevent this problem, in the system according to the invention, a further sensor, indicated PA' in Figure 1, is associated with the accelerator pedal for supplying a signal (of the logic type) to the unit MCU when the pedal is fully depressed (kick-down).

With the system described above, in order to move off uphill, the user must depress the pedal A fully so as to activate the microswitch which constitutes the sensor PA'. In the presence of a signal from PA', the unit MCU checks whether the speed of the output shaft 3 of the gearbox PS is below a certain predetermined value and, by comparing the signals of the sensors GU1 and GU2, checks whether the truck is moving backwards.

If so, the unit MCU pilots the modulator EVP so as to send a very high pressure to the clutches DI of the gearbox PS even up to the maximum pressure which the pump P can supply. The system thus rapidly delivers a very considerable torque, effectively limiting the rearward movement of the truck.

Naturally, the control methods described above take place when moving-off uphill is effected in automatic mode.

To advantage, however, the unit MCU is arranged to enable moving-off uphill with limited rearward movement even when the system is operating in the mode defined above as "manual". For this purpose, in the manual mode, the unit MCU detects the time elapsing between each operation of the sensor PA and the operation of the sensor PA' by the accelerator pedal A. If this time is less than a predetermined threshold value, the unit MCU operates the pressure modulator EVP so as to supply a high pressure quickly (even up to the maximum pressure which can be delivered by the pump).

If, after the operation of the sensor PA, the sensor PA' is not also operated (within a predetermined maximum time), however, the unit MCU activates the normal starting procedure.

## THE GEAR-CHANGING FUNCTION

The need to carry out this function is recognised by the unit MCU each time the sensors PA and MS indicate that the accelerator pedal A is depressed and the selector S is moved to a position corresponding to a gear or ratio which corresponds to the direction in which the vehicle is moving (which is detectable by comparing the signals supplied by the sensors GU1 and GU2).

In general, in order to change gear, the unit MCU reduces the fluid pressure by means of the pressure modulator EVP and then pilots the solenoid valves $V_i$ so as to change the gear.

Naturally, the principle of the invention remaining the same, the forms of embodiment and details of construction may be varied with respect to those described and illustrated without thereby departing from the scope of the invention.

## Claims

1. An electronic control system for a hydrokinetic transmission for a motor vehicle, particularly a lift truck with an internal combustion engine the speed of rotation of which can be controlled by an accelerator,

the transmission including a hydraulic converter (CI), and

a power-shift gearbox (PS) coupled to the output shaft (2) of the converter (CI) and including a plurality of hydraulic clutches (DI) which are associated with the gears, which can be activated selectively by the manual operation of a selector (MS), and which are controlled by a plurality of enabling on-off solenoid valves (V1-Vn), and an electrically-operated pressure-modulator (EVP) connected to a source (P) of pressurised fluid,

the control system including:

sensor means (GM, GT, GU1, GU2, PA, MS) for supplying electrical signals indicative of the speed of rotation of the input shaft (1) and the output shaft (2) of the converter (CI), of the speed and sense of rotation of the output shaft (3) of the gearbox (PS), and of the positions of the accelerator (A) of the engine (MT) and of the selector (S), and

an electronic processing and control unit (MCU) which is arranged to pilot the pressure modulator (EVP) and the enabling solenoid valves (V1-Vn) in a predetermined manner in dependence on the signals supplied thereto by the sensor means,

the control system being characterised in that it also includes a manual or pedal-operated control (I) connected to the electronic unit (MCU) and associated with a position sensor (PI), and in that

the electronic unit (MCU) is arranged to effect an automatic control procedure for advancing the vehicle slowly at a predetermined speed ($V_T$) when the sensor means (GM, GT, GU1, GU2, PA, MS, PI) indicate that the selector (S) is set at a gear ratio and the accelerator (A) and the manual or pedal-operated control (I) are operated,

the unit (CU) automatically regulating, by means of the modulator (EVP), the pressure of the fluid supplied selectively to the clutch or clutches (DI) associated with the gear engaged during the slow advance procedure so that the deviations of the speed of the vehicle from a predetermined reference value $(V_T)$, which depends on the detected extent of operation of the manual or pedal-operated control (I) and on the gear engaged, are kept within a predetermined range.

2. A system according to Claim 1, characterised in that, during the slow advance procedure, the control unit (MCU) is arranged to check, on the basis of the signals supplied by the sensors (GU1, GU2), whether the vehicle is stationary or moving in the direction consistent with the gear engaged and, if the vehicle is moving in the direction opposite that which is consistent with the gear engaged, to adjust the pressure of the fluid by means of the modulator (EVP) by pressure increments proportional to the ratio between the output and input speeds of the converter (CI).

3. A control system according to Claim 1 or Claim 2, characterised in that, if the vehicle is moving in the direction consistent with the gear engaged, in order to effect the automatic slow advance prodcedure, the electronic unit (MCU) is arranged to acquire the vehicle-speed value $(V_{GU})$ at a predetermined frequency and to bring about successive periodic incremental variations in the fluid pressure in dependence on the difference between the vehicle speed detected and the reference speed value $(V_T)$ corresponding to the detected extent of operation of the manual or pedal-operated control (I) and to the gear engaged.

4. A system according to Claim 3, characterised in that the unit (MCU) is arranged to bring about positive increments in the fluid pressure according to functions of:

$$\left[ \frac{V_T - \alpha \cdot V_{GU}}{V_T} \right]^2$$

in which the symbols have the meanings defined in the foregoing description.

5. A system according to Claim 4, characterised in that the unit (MCU) is arranged to bring about positive increments of the fluid pressure calculated as functions of:

$$\left[ \frac{V_T - \alpha \cdot V_{GU}}{V_T} \right]^2 \cdot \frac{V_{GT}}{V_{GM}}$$

in which the symbols have the meanings defined in the foregoing description.

6. A control system according to Claim 3 or Claim 4, characterised in that the unit (MCU) is arranged to bring about decrements of the fluid pressure calculated as functions of:

$$\frac{\alpha \cdot V_{GU} - V_T}{V_T^2}$$

in which the various symbols have the meanings defined in the foregoing description.

7. A system according to one of the preceding claims, characterised in that the unit (MCU) is arranged to put into effect a stopping procedure (Figure 3) in which the unit simultaneously engages two opposing gears by means of the solenoid valves $(V_1 ... V_n)$.

8. A system according to Claim 7, characterised in that the unit (MCU) is arranged to check the position of the accelerator pedal (A) during the stopping procedure, to keep the fluid pressure at a low value as long as the pedal (A) is depressed, and to bring about a controlled increase in the pressure when the pedal (A) is released.

9. A system according to Claim 8, characterised in that the unit is arranged to bring about pressure increments ($\Delta$ p*) calculated according to the expression:

$$D \cdot \left[ 1 - \left( \frac{V_{GT}}{V_{GM}} \right)^2 \right] + E$$

in which the various symbols have the meanings defined in the foregoing description.

10. A system according to one of Claims 5 to 9, characterised in that the unit (MCU) is arranged to calculate incremental variations of the fluid pressure according to the equation:

$$\overline{\Delta} p = \Delta p^* \cdot TF$$

in which the symbols have the meanings defined in the foregoing description.

11. A control system according to Claim 10, characterised in that the unit (MCU) is arranged to calculate the value of the fluid pressure due to the centrifugal force acting on the fluid in the clutches (DI) according to a predetermined function in dependence on the speed of rotation of the output shaft (2) of the hydraulic torque converter (CI), and to bring about an incremental change ($\overline{\Delta}$ p) in the fluid pressure, the increment being reduced in dependence on the pressure change ($p_{cf}$) due to the centrifugal force.

12. A system according to Claim 9, characterised in that the unit (MCU) is arranged to effect each pressure increment only if the speed of rotation of the output shaft (3) of the gearbox (PS) is below a predetermined threshold.

13. A system according to Claim 9 or Claim 12, characterised in that the unit (MCU) is arranged to effect a smaller pressure increment when the increment calculated could cause the fluid pressure to exceed a predetermined maximum value.

14. A system according to one of Claims 9 to 13, characterised in that the unit (MCU) is arranged to increase the pressure until a predetermined value of the ratio ($V_{GT}/V_{GM}$) between the output and input speeds of the converter is reached, this value being close to the value which corresponds to the stall condition of the converter.

15. A system according to one of the preceding claims, characterised in that the unit (MCU) is adapted to carry out an automatic deceleration procedure (Figure 4), in which it brings about successive calculated increments in the fluid pressure, each calculated increment being effected only if the expression:

$$\beta = p \cdot |V_{GT} - \tau \cdot V_{GU}|$$

is less than a predetermined value $\beta_o$, the symbols in the expression having the meanings defined in the foregoing description.

16. A system according to Claim 15, characterised in that the unit is arranged to effect a smaller pressure increment when the calculated increment could cause $\beta$ to exceed $\beta_o$.

17. A system according to Claim 15 or Claim 16, characterised in that the unit (MCU) is also adapted to effect an automatic procedure (retarding, Fig. 5) for slowing the movement of the vehicle in a predetermined manner in dependence on its speed.

18. A system according to one of Claims 15 to 17, characterised in that the unit (MCU) is also adapted to effect a procedure for reversing the drive (Fig. 6).

19. A system according to one of the preceding claims, characterised in that the unit (MCU) is adapted to effect a procedure for moving the vehicle off, during which it brings about the engagement, by means of the solenoid valves ($V_1...V_n$), of the first gear or of another gear according to whether the ratio between the speed of rotation ($V_{GU}$) of the output shaft (3) of the gearbox (PS) and the speed of rotation ($V_{GM}$) of the engine (MT) is less than or greater than a predetermined value (W), the unit (MCU) then controlling the increase of the fluid pressure in a predetermined manner.

20. A system according to Claim 19, characterised in that a further, end-of-travel sensor (PA') is associated with the accelerator pedal (A), and in that the unit (MCU) is adapted, in a first operating mode, to effect a procedure for moving off uphill when the further sensor (PA') indicates that the accelerator pedal (A) has been fully depressed and the speed sensors (GU1, GU2) indicate that the vehicle is moving backwards and that the speed of the output shaft (3) of the gearbox (PS) is below a predetermined value, the unit (MCU) causing a maximum fluid pressure to be applied to the enabling solenoid valve ($V_1...V_n$) selectively activated during the procedure for moving off uphill.

21. A system according to Claim 20, characterised in that the unit (MCU) is adapted, in a second operating mode, to effect the procedure for moving off uphill when the time elapsing between the operation of the first and second sensors (PA, PA') associated with the accelerator pedal is below a predetermined value.

FIG. 1

# FIG. 2

## INCHING FUNCTION

```
PI = I OPERATED
MS = SELECTOR
AT A GEAR
```

↓

```
START INCHING
FUNCTION
```

↓

```
EXAMINE PHASE DIFFERENCE
BETWEEN SIGNALS OF GU1
AND GU2
```

↓

```
VEHICLE
STATIONARY OR
MOVING IN THE DIRECTION
CONSISTENT WITH THE
GEAR ENGAGED
```

NO →

```
CALCULATE INCREMENT
OF P
Δp = C · (V_GT / V_GM) · TF - p_cf
```

YES ↓

```
READ V_T CORRESPONDING TO
GEAR ENGAGED AND TO THE
EXTENT OF OPERATION OF I
```

↓

```
V_GU
CORRESPONDS TO
V_T ?
```

YES →

```
LEAVE FLUID
PRESSURE
UNCHANGED
```

NO ↓

```
V_GU > V_T
```

NO ←  → YES

```
CALCULATE FLUID-
PRESSURE INCREMENT
Δp
```

```
CALCULATE FLUID-
PRESSURE
DECREMENT Δp
```

↓

```
PILOT    EVP
```

FIG. 3

*STOPPING FUNCTION*

```
┌─────────────────────────────┐
│ PI : 1 RELEASED &           │
│ (PA : A RELEASED OR MS IN   │
│  NEUTRAL AND V_GU < MIN.)   │
└─────────────────────────────┘
              │
              ▼
      ┌─────────────────┐
      │ START STOPPING  │
      │    FUNCTION     │
      └─────────────────┘
              │
              ▼
      ┌─────────────────────┐
      │ EVP : REDUCE p TO   │
      │  MINIMUM VALUE      │
      │ V_j : ENGAGE 1st    │
      │ FORWARD AND 1st     │
      │ REVERSE GEARS       │
      └─────────────────────┘
              │
              ▼
         ╱──────────╲
   NO  ╱ PEDAL(S) A  ╲
  ◄───╱  RELEASED     ╲
       ╲             ╱
        ╲──────────╱
           │ YES
           ▼
         ╱──────────╲
   NO  ╱  V_GU < MAX ╲
  ◄───╱              ╲
       ╲            ╱
        ╲─────────╱
           │ YES
           ▼
         ╱──────────────╲
   NO  ╱ V_GT/V_GM ≥ 0,1 ╲
  ◄───╱                  ╲
       ╲                ╱
        ╲──────────────╱
           │ YES
           ▼
```

Stopping function flowchart (Fig. 3)

$$CALCULATE\ PRESSURE\ INCREMENT$$

$$\Delta_p = \left\{ D - \left[ 1 - \left( \frac{V_{GT}}{V_{GM}} \right)^2 \right] + E \right\} \cdot TF - p_{cf}$$

$$p = p_{R-1} + \Delta_p < p_{max} \quad \xrightarrow{\text{NO}} \quad p = p_{max}$$

YES

$$EVP : EFFECT\ p$$

# FIG. 4

## AUTOMATIC DECELERATION

# FIG. 5

## RETARDING FUNCTION

MS: 1st GEAR ENGAGED / PA: A DEPRESSED  OR  MS: GEAR ENGAGED / PA: RELEASED

$\tau \cdot V_{GU}/V_{GM} > Z$ , $Z \geq 1$ — NO → FLAG = 1? — YES

FLAG = 1? — NO

YES ↓

START RETARDING FUNCTION

$\tau \cdot V_{GU}/V_{GM} < Z$ FOR THE FIRST TIME — NO

YES ↓

FLAG = $\phi$? — NO

YES ↓

EVP: $p = P_{min.}$  FLAG = 1

$V_i$: ENGAGE 1st GEAR CONTRARY TO THAT DETECTED BY MS

AUTOMATIC DECELERATION (FIG. 4)

MS: GEAR SELECTED HAS CHANGED? — YES →

NO ↓

A = 1 ? — NO →

YES

EVP: SET $p$ TO MINIMUM

$V_i$: DISENGAGE CONTRARY 1st GEAR

STOP RETARDING FUNCTION  FLAG = $\phi$

EVP: RE-ESTABLISH INITIAL $p$ AND INITIAL MOTION CORRECTIONS

18

# FIG. 6

## *REVERSAL FUNCTION*

PA : A DEPRESSED

MS : SELECTOR NOT IN NEUTRAL

&

GEAR ENGAGED HAS THE OPPOSITE SIGN TO THAT ACTIVATED BY $V_i$

↓

EVP : $p = p_{min}$

↓

$V_i$ : ENGAGE 1st GEAR WITH THE SAME SIGN AS THE GEAR INDICATED BY MS

↓

AUTOMATIC DECELERATION (FIG. 4)

↓

DIRECTION OF TRAVEL CONSISTENT WITH GEAR ENGAGED ──NO──→

↓ YES

MOVING-OFF FUNCTION (FIG. 7)

# FIG. 7

## *MOVING - OFF FUNCTION*

PA: A DEPRESSED

MS: SELECTOR NOT IN NEUTRAL

Vi: KEEPING PS IN NEUTRAL

↓

EVP: $p = p_{min}$.

↓

$\tau \cdot V_{GU}/V_{GM} > W$ — YES →

Vi: ENGAGE GEAR CORRESPONDING TO THE SPEED OF MOVEMENT OF THE VEHICLE AT THE TIME IN QUESTION.

NO ↓

Vi: ENGAGE 1st GEAR

↓

EVP: INCREASE P IN DEPENDENCE ON $V_{GU}$ AND $|\tau V_{GU} - V_{GT}|$

↓

$p \geq p_{MAX}$ — NO ←

YES ↓

MOVING - OFF COMPLETED